# EUROPEAN PATENT SPECIFICATION

(11) **EP 2 228 290 B1**
(45) Date of publication and mention of the grant of the patent: **25.04.2012**
(21) Application number: 09162483.3
(22) Date of filing: 11.06.2009
(51) Int. Cl.: B62K 25/30, B62K 25/28

(54) **Rear suspension for a bicycle**
Hinterradaufhängung für ein Fahrrad
Suspension arrière pour une bicyclette

(30) Priority: 10.03.2009 TW 98107636
(43) Date of publication of application: 15.09.2010
(73) Proprietor: Huang, Stephen, Ching Suei T'ai chung (TW)
(72) Inventor: Huang, Stephen, Ching Suei T'ai chung (TW)
(74) Representative: Chaillot, Geneviève

(56) References cited:
- GB-A- 2 381 248
- US-A- 5 452 910
- US-A- 5 553 881

## Description

### FIELD OF THE INVENTION

The present invention relates to a rear suspension system for bicycles, and more particularly, to a rear suspension system wherein the distance between the bottom bracket and the rear wheel axle is unchanged during operation.

### BACKGROUND OF THE INVENTION

A conventional rear suspension system for bicycles is specifically designed to reduce the shocks transferred to the riders during uneven roads. The rear suspension system is deformed to absorb the shocks from the roads so that the riders have comfortable riding experienced.

The conventional rear suspension system generally includes a shock absorbing member, chain stays, seat stays and multiple link units, the rear suspension system is activated to generate relative movement between the seat tube and the rear wheel so as to reduce the shocks transferred to the riders.

The conventional rear suspension system is connected with the chain unit which generally includes a chain ring which is connected to the bottom bracket axle and a sprocket unit which is connected to the rear wheel, a chain is driven between the chain ring and one of the sprockets.

The distance between the chain ring and the sprocket decides the tension of the chain which is supposed to have a proper tension so as to transfer the force from the chain ring to the sprocket and the rear wheel. If the tension is less than required, the chain might be dropped. All the pivotable points between the bottom bracket axle and the sprocket unit affect the distance mentioned above.

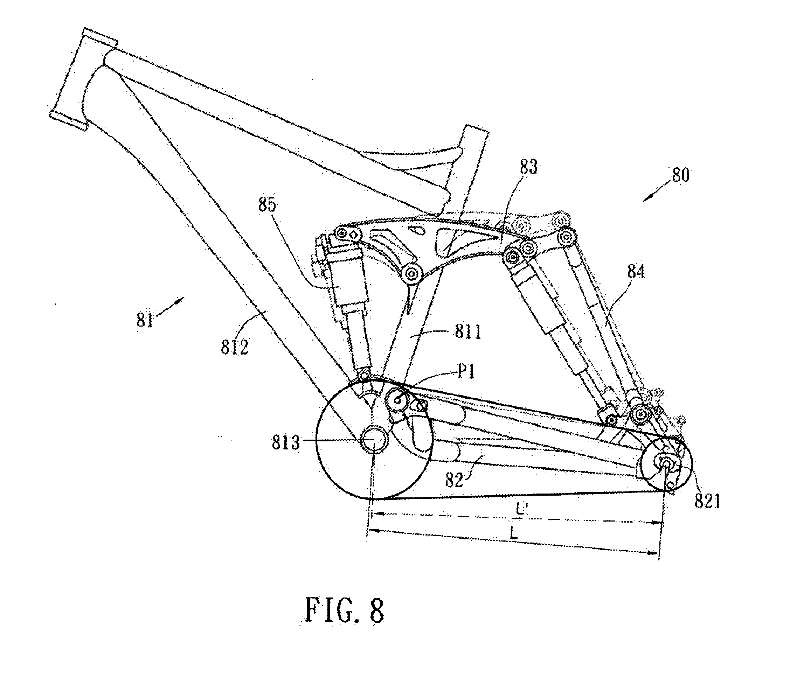

One of the conventional rear suspension system 80 known to applicant is shown in Fig. 8, and generally includes a frame 81, a seat tube 811, a down tube 812, a bottom bracket 813 connected to the conjunction of the seat tube 811 and the down tube 812 and chain stays 82 which are connected between the seat tube 811 and two dropouts 821. A swing unit 83 is pivotably connected to the seat tube 811 and seat stays 84 are connected between the two dropouts 821 and the swing unit 83. A shock absorbing member 85 is located within an area enclosed by the frame 81 and has one end pivotably connected to the frame 81 and the other end is pivotably connected to the swing unit 83.

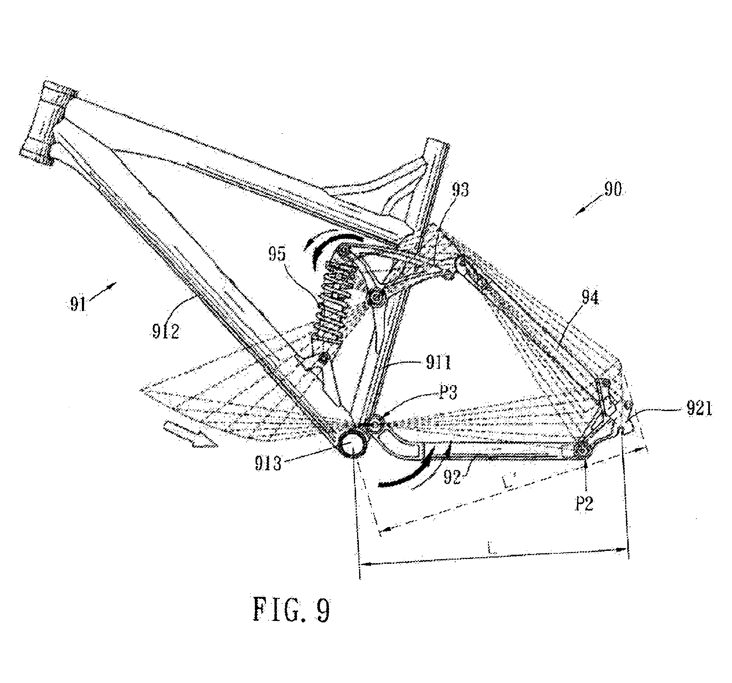

Another conventional rear suspension system 90 known to applicant is shown in Fig. 9, and generally includes a frame 91, a seat tube 911, a down tube 912, a bottom bracket 913 connected to the conjunction of the seat tube 911 and the down tube 912 and chain stays 92 which are connected between the seat tube 911 and two dropouts 921. A swing unit 93 is pivotably connected to the seat tube 911 and seat stays 94 are connected between the two dropouts 921 and the swing unit 93. A shock absorbing member 95 is located within an area enclosed by the frame 91 and has one end pivotably connected to the frame 91 and the other end is pivotably connected to the swing unit 93.

The difference between the two conventional rear suspension systems is that the dropouts 821 and the chain stays 82 of the first conventional rear suspension system is integral to each other and the seat stays 84 are located above the dropouts 821. There is only one pivotal position P1 is located between the distance "L" between the bottom bracket 813 and the dropouts 821. When the rear wheel is moved upward and the chain stays 82 pivot about the pivotal position P1. The movement of the chain stays 82 changes the distance from "L" to "L"' which is not equal to "L". The change affects the tension of the chain.

The dropouts 921 and the chain stays 92 for the second conventional rear suspension system are pivotably connected to each other and the seat stays 94 are located beneath the dropouts 921. There are two pivotal positions "P2" and "P3", the "P2" is located at the dropouts 921 and the chain stays 92, and the "P3" is located at the chain stays 92 and the seat tube 911. When the rear wheel is moved upward, both of the two pivotal positions P2 and P3 affect the distance from "L" to "L"'. The change is larger than that in the first conventional rear suspension system.

Another known rear suspension system for bicycles is disclosed in US-A-5452910.

The present invention intends to provide a rear suspension system for bicycles and the distance between the bottom bracket and the rear wheel axle is maintained to be not changed so that the tension of the chain can be kept.

### SUMMARY OF THE INVENTION

The present invention relates to a rear suspension system for bicycles and the device comprises a frame and a bottom bracket is connected to the conjunction end of the seat tube and the down tube. Two lugs are connected to the conjunction end and a recess is defined between the two lugs. A chain stay unit includes two chain stays and the bottom bracket is integrally connected between two respective first ends of the two chain stays. The chain stay unit includes two first pivot points and two second pivot points. A first link unit has a first end pivotably connected to the first pivot points and a second end of the first link unit is pivotably connected to one of the two lugs. A second link unit has a first end pivotably connected to the second pivot points and a second end of the second link unit is pivotably connected to the other one of the two lugs. When the rear wheel is pivoted upward, the first and second link units are moved relative to each other to reduce the shocks transferred from the ground and the distance between the bottom bracket and the rear wheel axle is maintained unchanged so as to prevent drop of the chain.

The primary object of the present invention is to provide a rear suspension system wherein the chain stay unit is a one-piece with the bottom bracket, so that the distance between the bottom bracket and the dropouts of the chain stays is fixed and does not change when the rear suspension system is activated.

Another object of the present invention is to provide a rear suspension system wherein the bottom bracket is indirectly connected to two lugs on the conjunction end of the seat tube and the down tube, so that the shocks are not transferred to the front of the bicycle.

Yet another object of the present invention is to provide a rear suspension system wherein the force that transferred to the chain stay unit can be shared by the first and second link units which are pivoted to reduce the force and the reduced force is then transferred to the bottom bracket.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the rear suspension system of the present invention;
Fig. 2 is a perspective view, from another angle, to show the rear suspension system of the present invention;
Fig. 3 is an exploded view to show the rear suspension system of the present invention;
Fig. 4 is an exploded view, from another angle, to show the rear suspension system of the present invention;
Fig. 5 shows a side view of a bicycle equipped with the rear suspension system of the present invention;
Fig. 6 is a partial cross sectional view of the connection of the two link units an the bottom bracket;
Fig. 7 shows that the distance between the bottom bracket and the dropouts of the rear suspension system of the present invention is not changed when the suspension system is activated;
Fig. 8 shows that the distance between the bottom bracket and the dropouts of a first conventional rear suspension system is changed, and
Fig. 9 shows that the distance between the bottom bracket and the dropouts of a second conventional rear suspension system is changed.

### DETAILED DESCRIPTION OF THE PREFERRED EMBODIMENT

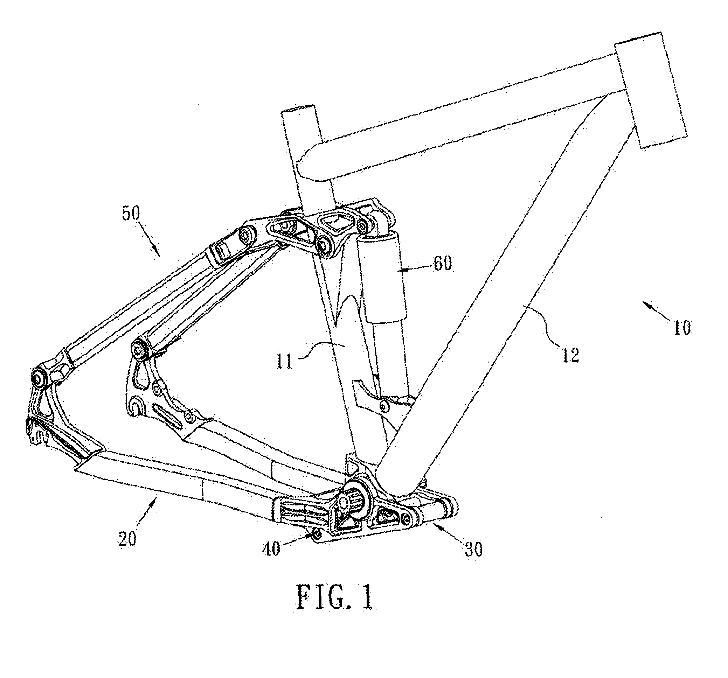

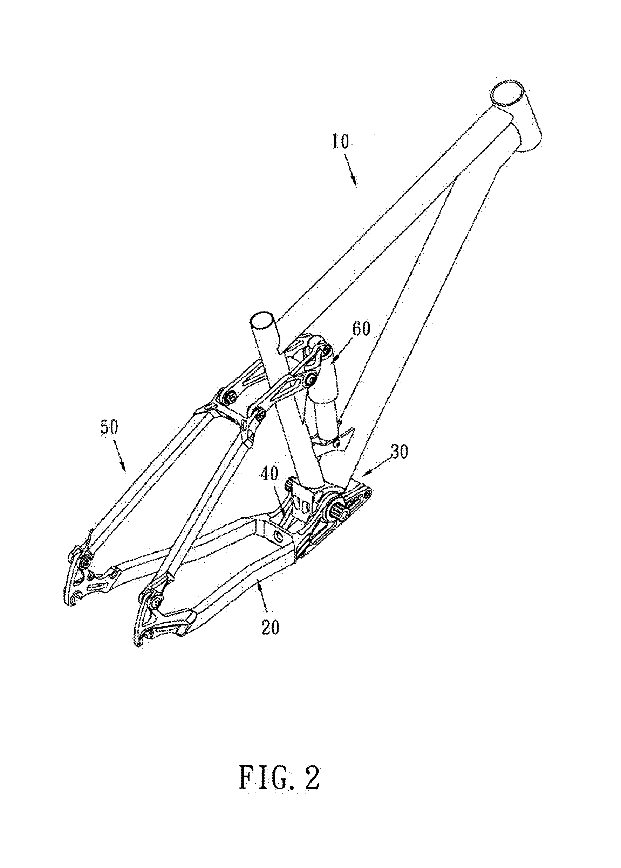

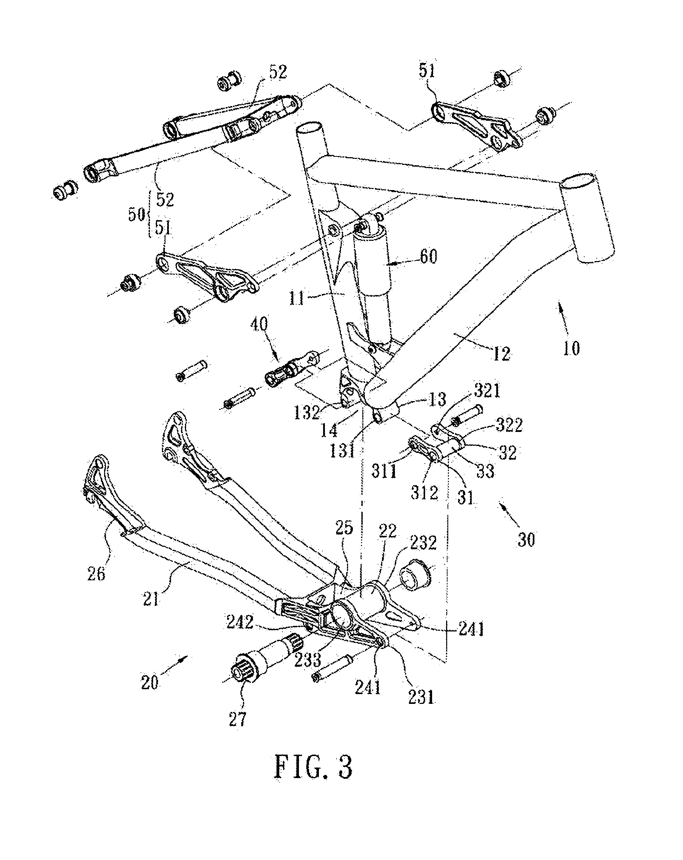

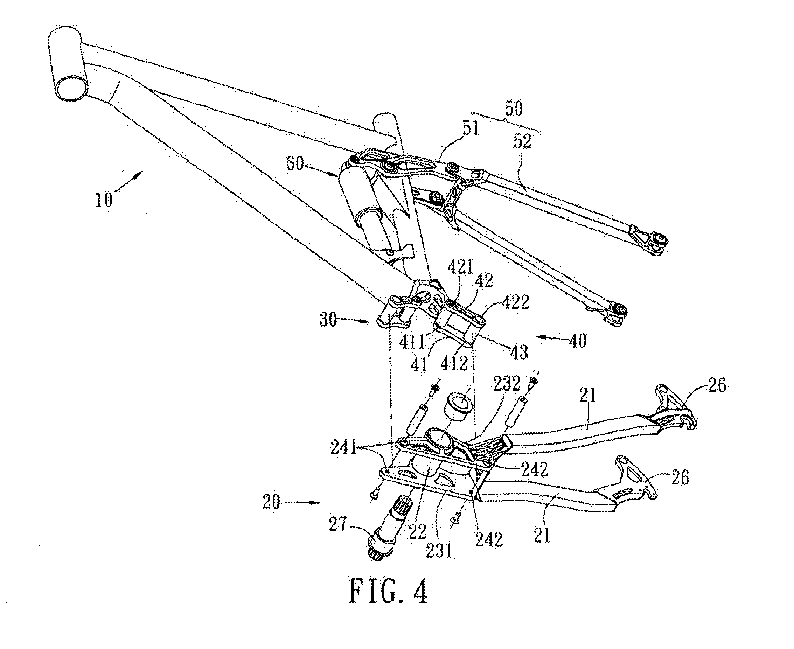

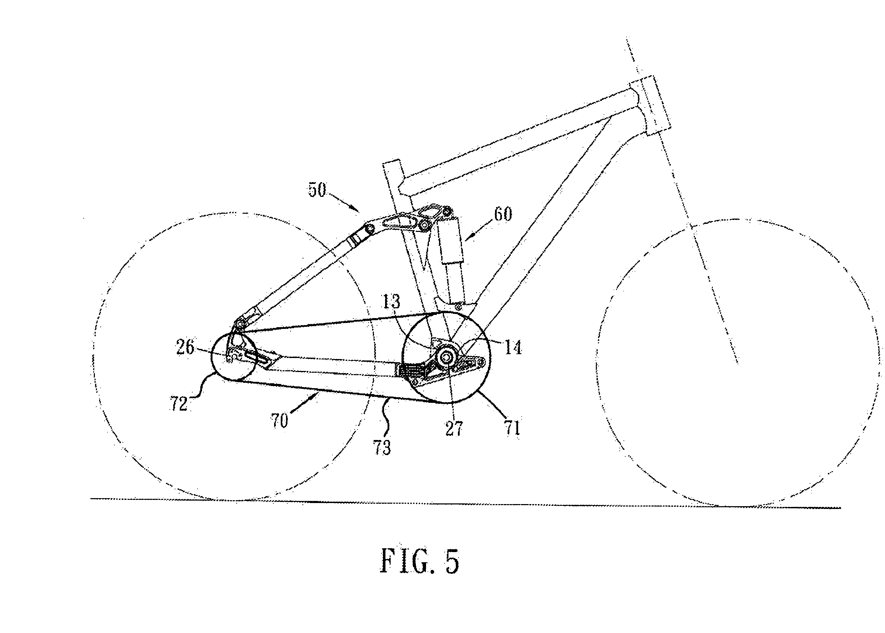

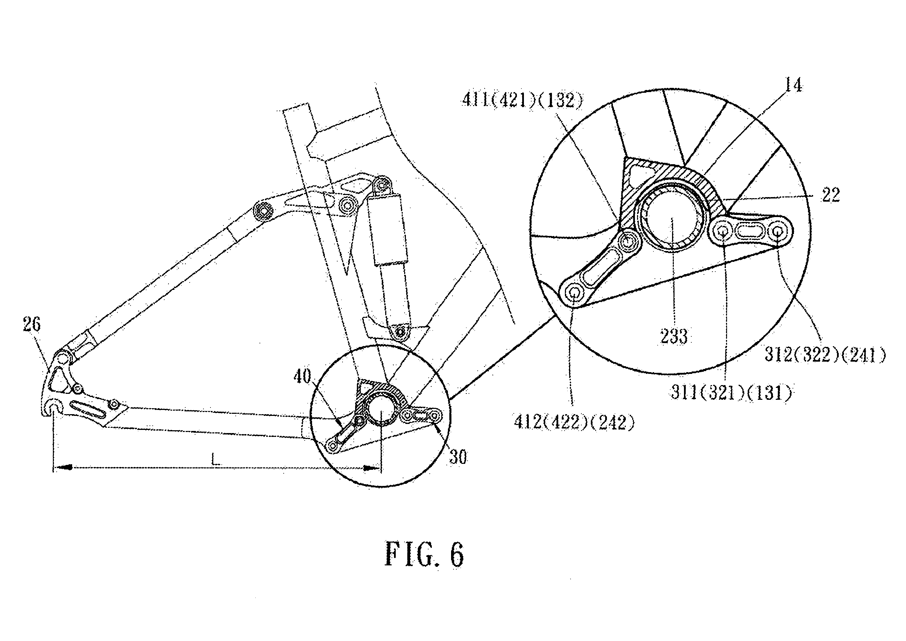

Referring to Figs. 1 to 6, the rear suspension system of the present invention comprises a frame 10 which includes a seat tube 11, a down tube 12, a first link unit 30, a second link unit 40, a swing unit 50 and a shock absorbing member 60.

The down tube 12 is connected to the seat tube 11 at a conjunction end and two lugs 13 are connected to the conjunction end. A recess 14 is defined between the two lugs 13. A first pivot place 131 and a second pivot place 132 are connected to the two lugs 13 respectively.

A chain stay unit 20 includes two chain stays 21 and a bottom bracket 22 is integrally connected between two respective first ends of the two chain stays 21. The bottom bracket 22 is engaged with the recess 14. The bottom bracket 22 is integrally connected between two side plates 231, 232 and a passage 233 is defined axially through the bottom bracket 22 and the two side plates 231, 232. Two first pivot points 241 are located on the first ends of the two side plates 231, 232 and two second pivot points 242 are located on the second ends of the side plates 231, 232. A space 25 is defined between the side plates 231, 232 and the bottom bracket 2, the second pivot place 132 is located in the space 25. An axle 27 is received in the passage 233 in the bottom bracket 22 and a chain ring 71 of a chain unit 70 is connected to the axle 27. Two dropouts 26 are connected to two respective second ends of the two chain stays 21 so as to be connected with a rear wheel and sprocket unit 72 of the chain unit 70. A chain 73 is driven between the chain ring 71 and one of the sprockets of the sprocket unit 72.

A first link unit 30 has a first end pivotably connected to the first pivot points 241 and a second end of the first link unit 30 is pivotably connected to one of the two lugs 13. A second link unit 40 has a first end pivotably connected to the second pivot points 242 and a second end of the second link unit 40 is pivotably connected to the other one of the two lugs 13. It is noted that the first and second link units 30, 40 are connected at an equal distance from a central axis of the bottom bracket 22.

The first link unit 30 has two first links 31, 32 and the two first links 31, 32 have two first ends 311, 321 and two second ends 312, 322. A first bar 33 is connected between the two second ends 312, 322 of the two first links 31, 32. The first bar 33 and the two second ends 312, 322 of the two first links 31, 32 are pivotably connected to the first pivot points 241. The two first ends 311, 321 of the two first links 31, 32 are pivotably connected to the first pivot place 131.

The second link unit 40 includes two second links 41, 42 and the two second links 41, 432 have two first ends 411, 421 and two second ends 412, 422. A second bar 43 is connected between the two second ends 412, 422 of the two second links 41, 42.

The second bar 43 and the two second ends 412, 422 of the two second links 41, 42 are pivotably connected to the second pivot points 242. The two first ends 411, 421 of the two second links 41, 42 are pivotably connected to the second pivot place 132.

The shock absorbing member 60 has a first end pivotably connected to a bridge part connected between the seat tube 11 and the down tube 12 of the frame 10 and a second end of the shock absorbing member 60 is pivotably connected to two swing members 51 of the swing unit 50. The swing unit 50 has a first end pivotably connected to the seat tube 11. The seat stays 52 have two first ends pivotably connected to a second end of the swing unit 50 and two second ends of the seat stays 52 are pivotably connected to the dropouts 26.

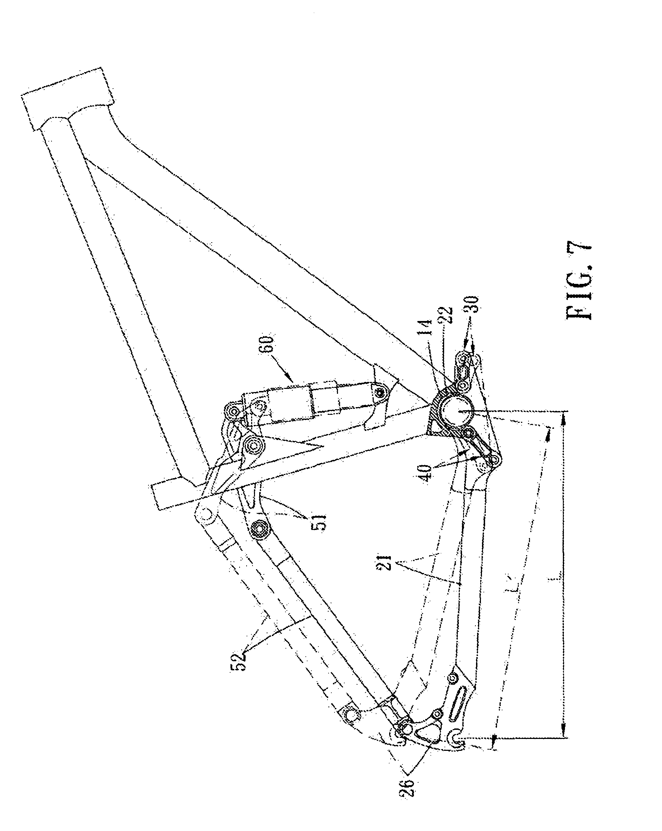

As shown in Fig. 7, when the chain stay unit 20 is pivoted, the first and second link units 30, 40 are pivoted about the first and second pivot places 131, 132. The distance "L" between the bottom bracket 22 and the dropouts 15 is not changed, so that when the rear suspension system is activated, the tension of the chain 73 is maintained so that the transmission by the chain 73 still functions well without worry of drop.

When riding on a bumped road, the rear wheel is pushed upward, chain stay unit 20 together with the sprocket unit 72 and the dropouts 26 are moved upward, the first and second link units 30, 40 are accordingly pivoted. The swing unit 50 is moved by the force transferred from the dropouts 26 so that the swing members 51 are pivoted to activate the shock absorbing member 60 to absorb the shocks. Therefore, the shocks that are transferred to the rider become much less than they are transferred to the rear wheel.

The chain stay unit 20 is a one-piece member and includes the bottom bracket 22, the chain stays 21 and the dropouts 26, so that the distance "L" between the bottom bracket 22 and the dropouts 15 is fixed. The distance "L"' between the bottom bracket 22 and the new position of the dropouts 15 after the rear wheel is moved upward is equal to the distance "L". In other words, the distance between the chain ring 71 and the sprocket unit 72 is not changed and the tension of the chain 73 remains the same. The chain 73 does not drop during the operation of the rear suspension system.

The bottom bracket 22 and the two lugs 13 are two individual designs so that the force transferred from the chain stay unit 20 does not transferred to the seat tube 11. This provides a comfortable riding to the riders and frame 10 has longer life of use.

The two separated first and second link units 30, 40 are respectively connected to the two lugs 13 so as to share the force transferred from the chain stay unit 20 by pivoting actions. The force is reduced by the pivoting actions and then transferred to the lugs 13 via the first and second pivot points 241, 242.

The space 25 is defined between the side plates 231, 232 and the bottom bracket 22 so as to receive the second pivot place 132, this saves room when assembling the chain stay unit 20 to the frame 10. The recess 14 between the two lugs 13 can be facing upward or downward or laterally when needed.

While we have shown and described the embodiment in accordance with the present invention, it should be clear to those skilled in the art that further embodiments may be made without departing from the scope of the present invention as defined in the claims.

## Claims

1. A rear suspension system for bicycles comprising:
a frame (10) having a seat tube (11), a down tube (12) which is connected to the seat tube (11) at a conjunction end and two lugs (13) connected to the conjunction end, a recess (14) defined between the two lugs (13);
a chain stay unit (20) including two chain stays (21) and a bottom bracket (22) integrally connected between two respective first ends of the two chain stays (21), the chain stay unit (20) including two first pivot points (241) and two second pivot points (242);
a first link unit (30) having a first end pivotably connected to the first pivot points (241) and a second end of the first link unit (30) pivotably connected to one of the two lugs (13), and
a second link unit (40) having a first end pivotably connected to the second pivot points (242) and a second end of the second link unit (40) pivotably connected to the other one of the two lugs (13) **characterised in that** the bottom bracket (22) is engaged with the recess (14).

2. The system as claimed in claim 1, wherein two dropouts (26) are connected to two respective second ends of the two chain stays (21) so as to be connected with a rear wheel and sprocket unit (72), a distance between the bottom bracket (22) and the dropouts (26) is not changed when the chain stay unit (20) is pivoted and activates the first and second link units (30, 40).

3. The system as claimed in claim 1, wherein the first and second link units (30, 40) are connected at an equal distance from a central axis of the bottom bracket (22).

4. The system as claimed in claim 1, wherein a first pivot place (131) and a second pivot place (132) are connected to the two lugs (13) respectively, the first link unit (30) has two first links (31, 32) and the second link unit (40) has two second links (41, 42), the two first links (31, 32) have two first ends (311, 321) and two second ends (312, 322), the two second links (41, 42) have two first ends (411, 421) and two second ends (412, 422).

5. The system as claimed in claim 4, wherein the first link unit (30) includes a first bar (33) connected between the two second ends (312, 322) of the two first links (31, 32), the first bar (33) and the two second ends (312, 322) of the two first links (31, 32) are pivotably connected to the first pivot points (241), the two first ends (311, 321) of the two first links (31, 32) are pivotably connected to the first pivot place (131).

6. The system as claimed in claim 4, wherein the second link unit (40) includes a second bar (43) connected between the two second ends (411, 422) of the two second links (41, 42), the second bar (43) and the two second ends (411, 422) of the two second links (41, 42) are pivotably connected to the second pivot points (242), the two first ends (411, 421) of the two second links (41, 42) are pivotably connected to the second pivot place (132).

7. The system as claimed in claim 1, wherein the bottom bracket (22) has an axle (27) received therein and a chain ring (71) is connected to the axle (27).

8. The system as claimed in claim 1, wherein a shock absorbing member (60) has a first end pivotably connected to the frame (10) and a second end of the shock absorbing member (60) is pivotably connected to two swing members (51) of a swing unit (50), the swing unit (50) has a first end pivotably connected to the seat tube (11), seat stays (52) have first ends pivotably connected to a second end of the swing unit (50) and second ends of the seat stays (52) are pivotably connected to the dropouts (26).

9. The system as claimed in claim 1, wherein the two lugs (13) have a first pivot place (131) and a second pivot place (132) connected thereto respectively, the recess (14) is located between the first and second pivot places (131, 132).

10. The system as claimed in claim 1, wherein the bottom bracket (22) of the chain stay unit (20) are integrally connected to two side plates (231, 232) and a passage (233) is defined axially through the bottom bracket (22) and the two side plates (231, 232), the first pivot points (241) and the second pivot points (242) are located on the two side plates (231, 232).

11. The system as claimed in claim 10, wherein the two lugs (13) have the first pivot place (131) and the second pivot places (131), a space (25) is defined between the side plates (231, 232) and the bottom bracket (22), the second pivot place (132) is located in the space (25).

## Patentansprüche

1. Hinterradaufhängungssystem für Fahrräder, umfassend:
- einen Rahmen (10), der ein Sitzrohr (11), ein Unterrohr (12), das mit dem Sitzrohr (11) an einem Verbindungsende verbunden ist, und zwei Ansätze (13) aufweist, die mit dem Verbindungsende verbunden sind, wobei eine Vertiefung (14) zwischen den zwei Ansätzen (13) definiert ist;
- eine Kettenstrebeneinheit (20), die zwei Kettenstreben (20) und ein Tretlager (22) aufweist, das zwischen zwei jeweiligen ersten Enden der zwei Kettenstreben (21) einteilig verbunden ist, wobei die Kettenstrebeneinheit (20) zwei erste Lagerpunkte (241) und zwei zweite Lagerpunkte (242) aufweist;
- eine erste Verbindungseinheit (30), die ein erstes Ende, das schwenkbar mit den ersten Lagerpunkten (241) verbunden ist, und ein zweites Ende der ersten Verbindungseinheit (30), das schwenkbar mit einem der zwei Ansätze (13) verbunden ist, aufweist, und
- eine zweite Verbindungseinheit (40), die ein erstes Ende, das schwenkbar mit den zweiten Lagerpunkten (242) verbunden ist, und ein zweites Ende der zweiten Verbindungseinheit (40), das schwenkbar mit dem anderen der zwei Ansätze (13) verbunden ist, aufweist,
**dadurch gekennzeichnet, dass** das Tretlager (22) mit der Vertiefung (14) in Eingriff steht.

2. System nach Anspruch 1, wobei zwei Ausfallenden (26) mit zwei jeweiligen zweiten Enden der zwei Kettenstreben (21) verbunden sind, um mit einem Hinterrad und einer Zahnkranzeinheit (72) verbunden zu werden, ein Abstand zwischen dem Tretlager (22) und den Ausfallenden (26) nicht verändert wird, wenn die Kettenstrebeneinheit (20) geschwenkt wird und die erste und zweite Verbindungseinheit (30, 40) aktiviert.

3. System nach Anspruch 1, wobei die erste und zweite Verbindungseinheit (30, 40) im selben Abstand zu einer Mittelachse des Tretlagers (22) verbunden sind.

4. System nach Anspruch 1, wobei eine erste Schwenkstelle (131) beziehungsweise eine zweite Schwenkstelle (132) mit den zwei Ansätzen (13) verbunden ist, die erste Verbindungseinheit (30) zwei erste Glieder (31, 32) aufweist und die zweite Verbindungseinheit (40) zwei zweite Glieder (41, 42) aufweist, die zwei ersten Glieder (31, 32) zwei erste Enden (311, 321) und zwei zweite Enden (312, 322) aufweisen, die zwei zweiten Glieder (41, 42) zwei erste Enden (411, 421) und zwei zweite Enden (412, 422) aufweisen.

5. System nach Anspruch 4, wobei die erste Verbindungseinheit (30) einen ersten Steg (33) aufweist, der zwischen den zwei zweiten Enden (312, 322) der zwei ersten Glieder (31, 32) verbunden ist, der erste Steg (33) und die zwei zweiten Enden (312, 322) der zwei ersten Glieder (31, 32) schwenkbar mit den ersten Lagerpunkten (241) verbunden sind, die zwei ersten Enden (311, 321) der zwei ersten Glieder (31, 32) schwenkbar mit der ersten Schwenkstelle (131) verbunden sind.

6. System nach Anspruch 4, wobei die zweite Verbindungseinheit (40) einen zweiten Steg (43) aufweist, der zwischen den zwei zweiten Enden (411, 422) der zwei zweiten Glieder (41, 42) verbunden ist, der zweite Steg (43) und die zwei zweiten Enden (411, 422) der zwei zweiten Glieder (41, 42) schwenkbar mit den zweiten Lagerpunkten (242) verbunden sind, die zwei ersten Enden (411, 421) der zwei zweiten Glieder (41, 42) schwenkbar mit der zweiten Schwenkstelle (132) verbunden sind.

7. System nach Anspruch 1, wobei das Tretlager (22) eine Achse (27) aufweist, die darin aufgenommen ist, und ein Kettenblatt (71) mit der Achse (27) verbunden ist.

8. System nach Anspruch 1, wobei ein Stoßdämpferelement (60) ein erstes Ende aufweist, das schwenkbar mit dem Rahmen (10) verbunden ist, und ein zweites Ende des Stoßdämpferelements (60) schwenkbar mit zwei Schwenkelementen (51) einer Schwenkeinheit (50) verbunden ist, die Schwenkeinheit (50) ein erstes Ende aufweist, das schwenkbar mit dem Sitzrohr (11) verbunden ist, Sitzstreben (52) erste Enden aufweisen, die schwenkbar mit einem zweiten Ende der Schwenkeinheit (50) verbunden sind, und zweite Enden der Sitzstreben (52) schwenkbar mit den Ausfallenden (26) verbunden sind.

9. System nach Anspruch 1, wobei die zwei Ansätze (13) eine erste Schwenkstelle (131) beziehungsweise eine zweite Schwenkstelle (132) aufweisen, die damit verbunden ist, die Vertiefung (14) zwischen der ersten und zweiten Schwenkstelle (131, 132) befindlich ist.

10. System nach Anspruch 1, wobei das Tretlager (22) der Kettenstrebeneinheit (20) einteilig mit zwei Seitenplatten (231, 232) verbunden ist und ein Durchgang (233) axial durch das Tretlager (22) und die zwei Seitenplatten (231, 232) definiert ist, die ersten Lagerpunkte (241) und die zweiten Lagerpunkte (242) an den zwei Seitenplatten (231, 232) befindlich sind.

11. System nach Anspruch 10, wobei die zwei Ansätze (13) die erste Schwenkstelle (131) und die zweiten Schwenkstellen (131) aufweisen, ein Zwischenraum (25) zwischen den Seitenplatten (231, 232) und dem Tretlager (22) definiert ist, die zweite Schwenkstelle (132) in dem Zwischenraum (25) befindlich ist.

## Revendications

1. Système de suspension arrière pour bicyclettes comprenant :
- un cadre (10) ayant un tube de selle (11), un tube diagonal (12) qui est relié au tube de selle (11) à une extrémité de liaison et deux oreilles (13) reliées à l'extrémité de liaison, une cavité (14) étant définie entre les deux oreilles (13) ;
- une unité fourche arrière (20) comprenant deux haubans (21) et un jeu de pédalier (22) relié d'un seul tenant entre deux premières extrémités respectives des deux haubans (21), l'unité fourche arrière (20) comprenant deux premiers points de pivotement (241) et deux seconds points de pivotement (242) ;
- une première unité de liaison (30) ayant une première extrémité reliée de façon pivotante aux premiers points de pivotement (241) et une seconde extrémité de la première unité de liaison (30) étant reliée de façon pivotante à l'une des deux oreilles (13), et
- une seconde unité de liaison (40) ayant une première extrémité reliée de façon pivotante aux seconds points de pivotement (242) et une seconde extrémité de la seconde unité de liaison (40) étant reliée de façon pivotante à l'autre des deux oreilles (13),
**caractérisé par le fait que** le jeu de pédalier (22) est engagé dans la cavité (14).

2. Système selon la revendication 1, dans lequel deux pattes arrière (26) sont reliées à deux secondes extrémités respectives des deux haubans (21) de façon à être reliées à une unité roue arrière et pignon (72), une distance entre le jeu de pédalier (22) et les pattes arrière (26) n'étant pas modifiée lorsque l'unité fourche arrière (20) est amenée à pivoter et active les première et seconde unités de liaison (30, 40).

3. Système selon la revendication 1, dans lequel les première et seconde unités de liaison (30, 40) sont reliées à équidistance vis-à-vis d'un axe central du jeu de pédalier (22).

4. Système selon la revendication 1, dans lequel un premier emplacement de pivotement (131) et un second emplacement de pivotement (132) sont reliés aux deux oreilles (13) respectivement, la première unité de liaison (30) ayant deux premières liaisons (31, 32) et la seconde unité de liaison (40) ayant deux secondes liaisons (41, 42), les deux premières liaisons (31, 32) ayant deux premières extrémités (311, 321) et deux secondes extrémités (312, 322), les deux secondes liaisons (41, 42) ayant deux premières extrémités (411, 421) et deux secondes extrémités (412, 422).

5. Système selon la revendication 4, dans lequel la première unité de liaison (30) comprend une première barre (33) reliée entre les deux secondes extrémités (312, 322) des deux premières liaisons (31, 32), la première barre (33) et les deux secondes extrémités (312, 322) des deux premières liaisons (31, 32) étant reliées de façon pivotante aux premiers points de pivotement (241), les deux premières extrémités (311, 321) des deux premières liaisons (31, 32) étant reliées de façon pivotante au premier emplacement de pivotement (131).

6. Système selon la revendication 4, dans lequel la seconde unité de liaison (40) comprend une seconde barre (43) reliée entre les deux secondes extrémités (411, 422) des deux secondes liaisons (41, 42), la seconde barre (43) et les deux secondes extrémités (411, 422) des deux secondes liaisons (41, 42) étant reliées de façon pivotante aux seconds points de pivotement (242), les deux premières extrémités (411, 421) des deux secondes liaisons (41, 42) étant reliées de façon pivotante au second emplacement de pivotement (132).

7. Système selon la revendication 1, dans lequel le jeu de pédalier (22) a un axe (27) reçu dans celui-ci et un plateau (71) est reliée à l'axe (27).

8. Système selon la revendication 1, dans lequel un élément amortisseur de choc (60) a une première extrémité reliée de façon pivotante au cadre (10) et une seconde extrémité de l'élément amortisseur de choc (60) étant reliée de façon pivotante à deux éléments oscillants (51) d'une unité oscillante (50), l'unité oscillante (50) a une première extrémité reliée de façon pivotante au tube de selle (11), des haubans (52) ont des premières extrémités reliées de façon pivotante à une seconde extrémité de l'unité oscillante (50) et des secondes extrémités des haubans (52) sont reliées de façon pivotante aux pattes arrière (26).

9. Système selon la revendication 1, dans lequel les deux oreilles (13) ont un premier emplacement de pivotement (131) et un second emplacement de pivotement (132) reliés à celles-ci respectivement, la cavité (14) étant située entre les premier et second emplacements de pivotement (131, 132).

10. Système selon la revendication 1, dans lequel le jeu de pédalier (22) de l'unité fourche arrière (20) est relié d'un seul tenant à deux plaques latérales (231, 232) et un passage (233) est défini axialement à travers le jeu de pédalier (22) et les deux plaques latérales (231, 232), les premiers points de pivotement (241) et les seconds points de pivotement (242) étant situés sur les deux plaques latérales (231, 232).

11. Système selon la revendication 10, dans laquelle les deux oreilles (13) ont le premier emplacement de pivotement (131) et le second emplacement de pivotement (132), un espace (25) étant défini entre les plaques latérales (231, 232) et le jeu de pédalier (22), le second emplacement de pivotement (132) étant situé dans l'espace (25).
